Europäisches Patentamt

(19) European Patent Office

Office européen des brevets

(11) Veröffentlichungsnummer : **0 077 321**
**B1**

(12) **EUROPÄISCHE PATENTSCHRIFT**

(45) Veröffentlichungstag der Patentschrift :
05.03.86

(21) Anmeldenummer : **82890142.1**

(22) Anmeldetag : **05.10.82**

(51) Int. Cl.⁴ : **C 11 D  3/395, C 11 D  3/48,**
**A 01 N 43/64**

(54) Bleichendes und bakterizides, viruzides sowie fungizides Mittel.

(30) Priorität : **09.10.81 DD 233979**

(43) Veröffentlichungstag der Anmeldung :
**20.04.83 Patentblatt 83/16**

(45) Bekanntmachung des Hinweises auf die Patenterteilung : **05.03.86 Patentblatt 86/10**

(84) Benannte Vertragsstaaten :
**AT DE FR GB NL SE**

(56) Entgegenhaltungen :
**DD-A-   149 678**
**NL-A- 6 516 398**

(73) Patentinhaber : **VEB Leuna-Werke "Walter Ulbricht"**

**DDR-4220 Leuna 3 (DD)**

(72) Erfinder : **Kochmann, Werner, Prof. Dr.**
**Krüllstrasse 4b**
**DDR-4440 Wolfen (DD)**
Erfinder : **Thust, Ulf, Dr.**
**Ziebigker Strasse 38**
**DDR-4500 Dessau (DD)**
Erfinder : **Pfeiffer, Hans-Dieter, Dipl.-Chem.**
**Strasse d. Republik 10**
**DDR-4440 Wolfen 3 (DD)**
Erfinder : **Winter, Harald, Dr.**
**Windmühlenstrasse 10**
**DDR-4220 Leuna (DD)**
Erfinder : **Steinke, Ulrich, Dr.**
**Karl-Schurz-Strasse 2**
**DDR-4020 Halle (DD)**
Erfinder : **Esser, Gerhard, Dr.**
**Lilienweg 2**
**DDR-4220 Leuna (DD)**
Erfinder : **Hammer, Lothar**
**Bl. 034/8**
**DDR-4090 Halle-Neustadt (DD)**
Erfinder : **Kaufmann, Detlef, Dr.**
**Hasenholzdrift 66**
**DDR-3280 Genthin (DD)**
Erfinder : **Opitz, Rudolf, Dr.**
**Schlossfreiheit 4**
**DDR-3504 Tangermünde (DD)**

Jouve, 18, rue St-Denis, 75001 Paris, France

Erfinder : **Wigert, Heinz, Dr.**
**G.-F.-Händel-Strasse 8**
**DDR-9659 Markneukirchen (DD)**
Erfinder : **Ueberschär, Klaus, Dr.**
**Haydnstrasse 10**
**DDR-9010 Karl-Marx-Stadt/DD**
**Puchberger, Rolf, Dipl. Ing., et al**
**Patentanwälte, Dipl. Ing. Georg Puchberger Dipl.**
**Ing.**
**Rolf Puchberger Dipl. Ing. Peter Puchberger**
**Singerstrasse 13 Postfach 55**
**A-1010 Wien/AT**

## Beschreibung

Die Erfindung betrifft ein bleichendes und antimikrobiell wirksames Mittel für Wasch-, Bleich-, Desinfektions- und Reinigungsprozesse, die insbesondere bei niederen Temperaturen durchgeführt werden.

Anorganische Persauerstoffverbindungen, insbesondere Natriumperborat und Natriumcarbonatperoxohydrat, sind Bestandteil handelsüblicher Wasch- und Reinigungsmittel, wobei bekannt ist, dass diese Sauerstoffbleichmittel bei Temperaturen unterhalb 80 °C nur ein sehr geringes Bleichvermögen besitzen. Eine antimikrobielle Wirkung ist mit herkömmlichen Wasch- und Reinigungsmitteln gleichfalls nur bei Temperaturen oberhalb 80 °C zu erzielen. Die alleinige Verwendung solcher Mittel für die Bleiche und Desinfektion von temperaturempfindlichen Textilien ergibt daher nur unzureichende Effekte.

Zur Erreichung eines ausreichenden antimikrobiellen Effektes im Waschprozess bei mittleren Temperaturen (40 °C-60 °C) werden häufig spezielle Desinfektionsmittel z. B. Formaldehyd, Phenole, quaternäre Ammoniumsalze, Heterocyclen (DD-A-135 287), zugesetzt. Derartig ausgerüstete Wasch- und Reinigungsmittel weisen keine Bleichwirkung auf und sind infolge der notwendigen relativ hohen Einsatzkonzentration der Desinfektionsmittel und der eingeschränkten Einsatzbedingungen mit grossen Nachteilen behaftet.

Die besonderen Anforderungen an den Gesundheitsschutz lassen insbesondere unter dermatologischen Gesichtspunkten einen Einsatz in Haushaltwaschmitteln nicht zu. Der nach DD-A-149 678 vorgeschlagene Einsatz des antimikrobiellen Wirkstoffes Hexahydro-1,3,5-triazin-2,4-dion (DHT) zeigt zwar eine gute antimikrobielle Wirkung bei Anwendungstemperaturen um 60 °C und beseitigt diesen Nachteil ; die zu beobachtende Freisetzung von Sauerstoff in peroxidhaltigen Waschmitteln führt jedoch nicht zu einer Verbesserung der Bleichwirkung im Temperaturbereich bis 60 °C. Die Wirkung entspricht damit der einer typischen Katalase für Peroxide.

Eine bessere Bleichwirkung bereits bei niedrigen Waschtemperaturen kann bekannterweise bei Verwendung organischer Persauerstoffverbindungen, insbesondere organische Persäuren, erreicht werden. Diese Persäuren besitzen auch eine ausgezeichnete antimikrobielle Wirkung bereits bei niederen Temperaturen und niederen Anwendungskonzentrationen. Die Einarbeitung solcher Verbindungen in pulverförmige Wasch- und Reinigungsmittel, und deren Handhabung sowie die Gewährleistung der Lagerstabilität sind jedoch problematisch.

Es ist weiterhin bekannt, dass anorganische Persauerstoffverbindungen durch Zusatz von Aktivatoren, insbesondere von reaktionsfähigen organischen N-Acyl- und O-Acylverbindungen, bei Temperaturen unterhalb 80 °C bleichwirksam werden und eine gute antimikrobielle Wirkung zeigen. Geeignete Aktivatoren sind beispielsweise Tetraacetylglykoluril, Tetraacetyläthylendiamin, Triacetylcyanurat, Pentaacetylglukose, Acetylsalicylsäure und Diacetyldiketopiperazin, wobei Tetraacetyläthylendiamin bereits in Waschmitteln eingesetzt wird. Solche Verbindungen reagieren in wässriger Lösung mit der anorganischen Persauerstoffverbindung unter Bildung organischer Persäuren, z. B. Peressigsäure, die bereits bei niederen Temperaturen ein gutes Bleichvermögen und antimikrobielle Wirkung ermöglichen. Bei der Auswahl geeigneter Aktivatoren ist ein hoher Grad der Perhydrolyse, die zu der gewünschten Bildung der organischen Persäuren führt, und eine möglichst geringe Neigung zur Hydrolyse im alkalischen Milieu, die zu einem vorzeitigen Verlust an Aktivatorwirkung durch Bildung unwirksamer Salze der organischen Säuren führt, erwünscht. Vermieden werden muss eine vorzeitige Reaktion des Aktivators mit dem anorganischen Persauerstoffträger bei der Lagerung konfektionierter Wasch- und Reinigungsmittel.

Die bisher bekannten Aktivatoren stellen keine Lösung dieses Problems dar. Einer umfassenden praktischen Anwendung stehen die erforderliche relativ hohe Einsatzkonzentration für Aktivatoren mit ausreichender Lagerstabilität, aber teilweise ungenügender Aktivatorwirkung, sowie die hohen Rohstoffkosten entgegen. Eine allgemeingültige Struktur-Wirkungs-Beziehung ist nicht bekannt.

Ein weiterer Nachteil der bekannten Aktivatoren ist die Tatsache, dass neben der Bildung organischer Persäuren Verbindungen gebildet werden, die keinerlei positive Wirkung auf den weiteren Wasch- und Desinfektionsvorgang besitzen.

Ziel der Erfindung ist es, ein bleichendes und bakterizides, viruzides sowie fungizides Mittel für Wasch-, Bleich-, Desinfektions- und Reinigungsprozesse zu schaffen, welches insbesondere bei niedrigen Waschtemperaturen eine hohe Bleichwirkung sowie ein breites antimikrobielles Wirkungsspektrum besitzt. Die Verwendung des erfindungsgemässen Mittels darf auch bei höheren Waschtemperaturen nicht zu einer stärkeren Substratschädigung als bei Verwendung herkömmlicher Sauerstoffbleichmittel führen. Die Lagerstabilität des bleichenden, bakteriziden, viruziden und fungiziden Mittels in Wasch-Bleich-Desinfektions-Reinigungsmitteln muss gewährleistet sein, die Einsatzkonzentration muss möglichst gering sein, und eine problemlose Einarbeitung mit bekannten Technologien muss möglich sein.

Ziel der Erfindung ist weiterhin die Realisierung einer antimikrobiellen Langzeitwirkung.

Aufgabe der Erfindung ist eine Kombination einer Persauerstoff-Verbindung mit einem Aktivator, der selbst antimikrobielle Eigenschaften besitzt, als Bestandteil eines im Temperaturbereich von 20 bis 90 °C, vorzugsweise 30 bis 60 °C, wirksamen bleichenden und bakteriziden, viruziden, sowie fungiziden Mittels.

Diese Aufgabe wird gelöst durch eine Kombination aus 10 bis 90 Masseteilen einer oder mehrer

# 0 077 321

Persauerstoff-Verbindungen und 90 bis 10 Masseteilen 1,5-Diacylhexahydro-1,3,5-triazin-2,4-dion (DAHT), gegebenenfalls neben bereits bekannten Wasch-, Bleich-, Desinfektions- und/oder Reinigungsmittelkomponenten.

Vorzugsweise wird eine Kombination aus 30 bis 70 Masseteilen Persauerstoff-Verbindungen und 60 bis 20 Masseteilen 1,5-Diacylhexahydro-1,3,5-triazin-2,4-dion benutzt. Eine vorteilhafte Kombination besteht aus Natriumperborat, Natriumcarbonatperoxohydrat oder Harnstoffperhydrat und 1,5-Diacetylhexahydro-1,3,5-triazin-2,4-dion.

DAHT kann aus Formaldehyd und Harnstoff mit nachfolgender Acylierung hergestellt werden, z. B. nach A. Piskala, I. Gut ; Coll. Czech. Chem, Commun. 27 1562 (1962) oder nach G. Ostrogovich, R. Vidac ; Rev. Chim. (Bukarest) 20 (10) 606 (1969). Das bleichende und bakterizide, viruzide sowie fungizide Mittel enthält vorteilhaft neben 5 bis 95 Masse-%, vorzugsweise 10 bis 50 Masse-%, der erfindungsgemässen Kombination noch bekannte Desinfektionskomponenten. Günstig ist es auch, die Kombination Wasch- und Reinigungsmitteln bekannter Zusammensetzung in Mengen von 1 bis 30 Masse-%, vorzugsweise 5 bis 15 Masse-%, zuzusetzen. Überraschenderweise verlaufen Perhydrolyse und Hydrolyse des Bleichmittelaktivators 1,5-Diacetylhexahydro-1,3,5-triazin-2,4-dion vollständig, und ein oxidativer Abbau des verbleibenden Grundkörpers Hexahydro-1,3,5-triazin-2,4-dion erfolgt unter den Bedingungen des Waschprozesses nicht, so dass die Desinfektionswirkung dieser Verbindung gemäss DD-A-149 678 genutzt werden kann. Damit wird die spezifische antimikrobielle Wirkung der organischen Persäure, die durch relativ schnellen Zerfall in alkalischer Lösung nur kurzzeitig wirksam ist, durch die Wirkung des Hexahydro-1,3,5-triazin-2,4-dion ergänzt. 1,5-Diacetylhexahydro-1,3,5-triazin-2,4-dion besitzt eine im Vergleich mit bekannten Aktivatoren wesentlich höhere Aktivierungswirkung für anorganische Persauerstoffverbindungen neben einer den praktischen Erfordernissen entsprechenden Lagerstabilität in Wasch-Bleich-Desinfektions- und Reinigungsmitteln. Eine vergleichbare Aktivierungswirkung besitzt Diacetyldiketopiperazin. Dieser zum Stand der Technik zu zählende Aktivator ist jedoch äusserst hydrolyseempfindlich und für die praktische Verwendung in Wasch- und Reinigungsmitteln ungeeignet.

Das erfindungsgemässe Mittel ist nicht haut- und schleimhautreizend, nicht toxisch und nicht korrosiv. Die Anwendung kann sowohl im industriellen Bereich als auch im Haushalt erfolgen. Anwendungstechnische Untersuchungen zeigen, dass beim Einsatz des erfindungsgemässen Mittels gegenüber herkömmlichen Persauerstoffbleichmitteln und bekannten aktivatorhaltigen Waschmitteln keine erhöhte Faserschädigung an den behandelten Textilien zu beobachten ist.

Nachfolgend wird die Erfindung an einigen Beispielen erläutert, ohne sie dadurch einzuschränken.

## Beispiel 1

Ein bleichendes und antimikrobiell wirksames Mittel besteht aus
50 Gew.-% Natriumperborat und
50 Gew.-% 1,5-Diacetylhexahydro-1,3,5-triazin-2,4-dion.

Zur Herstellung eines bei niederen Temperaturen bleichenden und antimikrobiell wirksamen Waschmittels werden 14 Teile des erfindungsgemässen Mittels mit 86 Teilen eines Waschmittels üblicher Zusammensetzung ohne Perboratzusatz gemischt (Rezeptur A). Vergleichsweise werden Rezepturen mit gleicher mengenmässiger Zusammensetzung unter Verwendung der bekannten Bleichmittelaktivatoren

| | |
|---|---|
| Pentaacetylglukose | Rezeptur B |
| Acetylsalicylsäure | Rezeptur C |
| Tetraacetyläthylendiamin | Rezeptur D |
| Tetraacetylglykoluril | Rezeptur E |
| Diacetyldiketopiperazin | Rezeptur F |

herangezogen.

Die Wirksamkeit des erfindungsgemässen Mittels wurde unter praxisnahen Bedingungen unter Verwendung der Rezepturen A bis F ermittelt. Zur Durchführung der Versuche wurde eine Laborwaschmaschine vom Typ « Scourotester » verwendet (Waschzeit 35 min, Konzentration 5 g/l, Flottenverhältnis 1 : 80, Temperatur 60 °C).

Als Prüfgewebe diente ein mit Schwefelgrün B gefärbtes Baumwollgewebe, das hinsichtlich seiner Empfindlichkeit gegenüber Oxidationsmitteln den mit Immedialgrün BTM gefärbten Geweben entspricht.

Zur Auswertung wurde die Differenz der gemessenen Remissionsgrade (R) vor der Wäsche und nach der 2. Wäsche herangezogen.

### Tabelle 1

| Rezeptur | A | B | C | D | E | F |
|---|---|---|---|---|---|---|
| R | 18,5 | 13,9 | 13,9 | 15,9 | 16,2 | 18,7 |

4

Zur Beurteilung der Lagerstabilität wurden je 280 g der Rezepturen A bis F in CEK-Faltschachteln bei 20-25 °C und 50-70 % rel. Luftfeuchte 8 Wochen gelagert und der Aktivsauerstoffverlust (%) ermittelt. (Tabelle 2)

Tabelle 2

| Rezeptur | A | B | C | D | E | F |
|---|---|---|---|---|---|---|
| Aktivsauerstoffverlust (%) | 26 | 18 | 40 | 24 | 25 | 80 |

Beispiel 2

Zur Prüfung der antimikrobiellen Wirksamkeit wurde ein bleichendes und antimikrobiell wirkendes Mittel, bestehend aus

11,8 %-1,5-Diacetylhexahydro-1,5,3-triazin-2,4-dion und
88,2 % Natriumperborat

verwendet. 17 Teile dieses Mittels wurden mit 83 Teilen eines üblichen Waschmittels ohne Perboratzusatz gemischt (Rezeptur G). Zur Prüfung unter praxisnahen Bedingungen wurden sterile Stoffstücke aus Leinen 15 min in einer Standardsuspension mit Testkeimen kontaminiert. Nach dem Antrocknen wurden sie in die Lösung des Waschmittels der Rezeptur G bei der gewählten Temperatur eingelegt, nach 60 min entnommen und zweimal mit destilliertem Wasser gespült. Die Stoffstücke werden zum Nachweis der Wirksamkeit in geeignete Nährmedien eingebracht, die Zusätze zum Ausschalten mikrobizider Nachwirkungen enthalten.

Die Auswertung erfolgte nach 6 Tagen (bei 37 °C bebrütet).

Die Bewertung erfolgte nach folgendem Boniturschema :

0 — völlige Abtötung der Testkeime
1 — ausreichende Wirksamkeit
2 — mittlere Wirksamkeit
3 — schwache Wirksamkeit
4 — keine Wirksamkeit

Folgende Testkeime wurden verwendet :
(1) Staphylococcus aureus SG 511
(2) Escherichia coli FMH 3
(3) Pseudomonas aeruginosa RLD 1

Der Vergleich erfolgte mit einer mengengleich angesetzten Rezeptur unter Verwendung des Wirkstoffes Hexahydro-1,3,5-triazin-2,4-dion (Rezeptur H).

Tabelle 3

| Temperatur | $40^{\circ}C$ | | | $50^{\circ}C$ | | | $60^{\circ}C$ | | |
|---|---|---|---|---|---|---|---|---|---|
| Testkeim | 1 | 2 | 3 | 1 | 2 | 3 | 1 | 2 | 3 |
| Rezeptur G | 0 | 0 | 0 | 0 | 0 | 0 | 0 | 0 | 0 |
| Rezeptur H | 3 | 0 | 3 | 2 | 0 | 0 | 0 | 0 | 0 |

Beispiel 3

Zur Herstellung einer bei niederen Temperaturen bleichenden und antimikrobiell wirksamen 0,5 %igen Waschmittel-Lösung (Rezeptur I), wurden zu 84 Teilen eines bleichmittelfreien Waschmittels üblicher Zusammensetzung 8 Teile Wasserstoffperoxid (30 %ig) und 8 Teile des Bleichaktivators 1,5-Diacetylhexahydro-1,3,5-triazin-2,4-dion in der zu bereitenden Waschmittelflotte gelöst.

Die Wirksamkeit des erfindungsgemässen Bleichaktivators wurde unter praxisnahen Bedingungen bei Verwendung der Rezeptur A bis I ermittelt. Die Versuchsbedingungen sowie die Auswertung wurden analog dem Beispiel 1 gewählt.

Tabelle 4

| Rezeptur | A | B | C | D | E | F | I |
|---|---|---|---|---|---|---|---|
| R | 18,5 | 13,9 | 13,9 | 15,8 | 16,2 | 18,7 | 18,1 |

5

# 0 077 321

## Beispiel 4

Ein bleichendes und antimikrobiell wirkendes Mittel, bestehend aus
38,5 Gew.-% Harnstoffperhydrat
61,5 Gew.-% 1,5-Diacetylhexahydro-1,3,5-triazin-2,4-dion,
wurde als erfindungsgemässes Mittel verwendet.

Zur Herstellung eines bei niederen Temperaturen bleichenden und antimikrobiell wirksamen Waschmittels wurden 23 Teilen des erfindungsgemässen Mittels mit 77 Teilen Waschmittel üblicher Zusammensetzung (ohne Perboratgehalt) gemischt (Rezeptur K). Vergleichsweise wurden Rezepturen unter Verwendung bekannter Bleichaktivatoren herangezogen. Die Wirksamkeit des erfindungsgemässen Mittels wurde unter praxisnahen Bedingungen unter Verwendung der Rezeptur A bis I ermittelt.

Die Versuchsbedingungen sowie die Auswertung entsprechen dem Beispiel 1.

### Tabelle 5

| Rezeptur | A | B | C | D | E | F | I | K |
|---|---|---|---|---|---|---|---|---|
| R | 18,5 | 13,9 | 13,9 | 15,9 | 16,2 | 18,7 | 18,1 | 18,4 |

## Patentansprüche

1. Bleichendes und bakterizides, viruzides sowie fungizides Mittel für Wasch-, Bleich-, Desinfektions- und Reinigungsprozesse im Temperaturbereich von 20 bis 90 °C, vorzugsweise 30 bis 60 °C, gekennzeichnet dadurch, dass es, gegebenenfalls neben bereits bekannten Wasch-, Bleich-, Desinfektions- und/oder Reinigungsmittelkomponenten, eine Kombination aus 10 bis 90 Masseteilen einer oder mehrerer Persauerstoff-Verbindungen und 90 bis 10 Masseteilen 1,5-Diacylhexahydro-1,3,5-triazin-2,4-dion enthält.

2. Bleichendes und bakterizides, viruzides sowie fungizides Mittel gemäss Anspruch 1, gekennzeichnet dadurch, dass die enthaltene Kombination aus 30 bis 70 Masseteilen einer oder mehrerer Persauerstoff-Verbindungen und 60 bis 20 Masseteilen 1,5-Diacylhexahydro-1,3,5-triazin-2,4-dion besteht.

3. Bleichendes und bakterizides, viruzides sowie fungizides Mittel gemäss Anspruch 1 und 2, gekennzeichnet dadurch, dass die enthaltenen Kombination aus Natriumperborat, Natriumcarbonatperoxohydrat oder Harnstoffperhydrat und 1,5-Diacetylhexahydro-1,3,5-triazin-2,4-dion besteht.

4. Bleichendes und bakterizides, viruzides sowie fungizides Mittel gemäss Anspruch 1 bis 3, gekennzeichnet dadurch, dass es neben 5 bis 95 Masse-%, vorzugsweise 10 bis 50 Masse-%, der erfindungsgemässen Kombination bekannte Komponenten von Desinfektionsmitteln enthält.

5. Bleichendes und bakterizides, viruzides sowie fungizides Mittel gemäss Anspruch 1 bis 3, gekennzeichnet dadurch, dass es in Wasch- und Reinigungsmitteln bekannter Zusammensetzung in Mengen von 1 bis 30 Masse-%, vorzugsweise 5 bis 15 Masse-%, enthalten ist.

## Claims

1. Bactericidal, virucidal and fungicidal bleaching product for wasching, bleaching, disinfection and purification processes in the temperature range of 20 to 90 °C, preferably 30 to 60 °C, characterised in that it contains, perhaps in addition to already known washing, bleaching, disinfection and/or purification components, a combination of 10 to 90 parts by weight of one or more peroxygen compounds and 90 to 10 parts by weight of 1,5-diacylhexahydro-1,3,5-triazine-2,4-dione.

2. Bactericidal, virucidal and fungicidal bleaching product according to claim 1, characterised in that the combination present consists of 30 to 70 parts by weight of one or more peroxygen compounds and 60 to 20 parts by weight of 1,5-diacylhexahydro-1,3,5-triazine-2,4-dione.

3. Bactericidal, virucidal and fungicidal bleaching product according to claims 1 and 2, characterised in that the combination present consists of sodiumperborate, sodiumcarbonateperoxhydrate or ureaperhydrate and 1,5-diacetylhexahydro-1,3,5-triazine-2,4-dione.

4. Bactericidal, virucidal and fungicidal bleaching product according to claims 1 to 3, characterised in that it contains known components of disinfection products in addition to 5 to 95 % by weight, preferably 10 to 50 % by weight, of the combination according to the invention.

5. Bactericidal, virucidal and fungicidal bleaching product according to claims 1 to 3, characterised in that it is contained in amounts of 1 to 30 % by weight, preferably 5 to 15 % by weight, in washing and purification products of known composition.

**Revendications**

1. Produit de blanchiment bactéricide, virucide ainsi que fongicide pour des processus de lavage, de blanchiment, de désinfection et de nettoyage dans une gamme de températures de 20 à 90 °C, de préférence de 30 à 60 °C, caractérisé en ce qu'il contient, éventuellement à côté de composants déjà connus de produits de lavage, de blanchiment, de désinfection et/ou de nettoyage, une combinaison de 10 à 90 parties en poids d'un ou de plusieurs composés à base de substance peroxygénée et de 90 à 10 parties en poids de 1,5-diacylhexahydro-1,3,5-triazine-2,4-dione.

2. Produit de blanchiment bactéricide, virucide ainsi que fongicide suivant la revendication 1, caractérisé en ce que la combinaison contenue est constituée de 30 à 70 parties en poids d'un ou de plusieurs composés peroxygénés et de 60 à 20 parties en poids de 1,5-diacylhexahydro-1,3,5-triazine-2,4-dione.

3. Produit de blanchiment bactéricide, virucide ainsi que fongicide suivant l'une des revendications 1 et 2, caractérisé en ce que la combinaison contenue est constituée de perborate de sodium, d'hydrate de peroxocarbonate de sodium ou d'urée-eau oxygénée et de 1,5-diacétylhexahydro-1,3,5-triazine-2,4-dione.

4. Produit de blanchiment bactéricide, virucide ainsi que fongicide suivant l'une des revendications 1 à 3, caractérisé en ce qu'il contient, en plus de 5 à 95 % en poids, de préférence de 10 à 50 % en poids, de la combinaison suivant l'invention, des composants connus de produits de désinfection.

5. Produit de blanchiment bactéricide, virucide ainsi que fongicide suivant l'une des revendications 1 à 3, caractérisé en ce que, dans des produits de lavage et de nettoyage de composition connue, il est contenu en des proportions de 1 à 30 % en poids, de préférence de 5 à 15 % en poids.